# EUROPEAN PATENT APPLICATION

(11) **EP 4 489 370 A1**
(43) Date of publication of application: **08.01.2025**
(21) Application number: 23773903.2
(22) Date of filing: 22.03.2023
(51) Int. Cl.: H04L 61/25

(54) **SRV6 MESSAGE PROCESSING METHOD AND APPARATUS, COMMUNICATION DEVICE, AND STORAGE MEDIUM**

(30) Priority: 24.03.2022 CN 202210303551
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: YANG, Feng, Beijing 100032 (CN); ZHANG, Geng, Beijing 100032 (CN); ZHANG, Xiaoqiu, Beijing 100032 (CN)
(74) Representative: J A Kemp LLP
(86) International application number: PCT/CN2023/083053
(87) International publication number: WO 2023/179656

(57) **Abstract**

Disclosed are an SRv6 message processing method and apparatus, a communication device, and a storage medium. The method comprises: a user side equipment setting a source address in an outer layer message header in a first SRv6 message as a first segment identifier (SID) on the basis of a pre-obtained first SID used for representing an address, and generating a second SRv6 message, where the first SID is pre-planned by a network service provider; and sending the second SRv6 message to a network device.

## Description

### CROSS-REFERENCE TO RELATED APPLICATION

This application is filed based on and claims priority to Chinese Patent application No. 202210303551.X filed on March 24, 2022, the contents of which are hereby incorporated by reference in its entirety.

### TECHNICAL FIELD

The disclosure relates to the technical field of communications, and in particularly to a method and apparatus for processing a segment routing over Internet protocol version 6 (SRv6) packet, a communication device, and a storage medium.

### BACKGROUND

An SRv6-traffic engineering (SRv6-TE) policy is a new tunneling and traffic diversion technology developed based on an SRv6 technology, and is a segment routing-traffic engineering (SR-TE) policy based on segment routing (SR) over Internet protocol version 6 (IPv6).

A binding segment identifier (BSID) in an SRv6 policy is a fundamental instruction of SR, and is configured to identify a candidate path. A cloud private network makes network path resources accessible through the BSID. At present, the BSID is encapsulated in a segment routing header (SRH), hash information is added to check whether the SRH has been modified; however, these information can be obtained through packet capture. Furthermore, since key information needs to be assigned to at least one network device and customer premise equipment (CPE), each network device performs hash checking according to the hash information in a segment identifier (SID) list in the SRH and the key. This process will cause a great performance loss for a forwarding process of the network device.

Furthermore, network attacks initiated based on source address spoofing have become a very common form of attack on the Internet, causing serious network security issues. The aforementioned solution cannot solve a problem of hackers to perform free traffic forwarding with BSID based on the source address spoofing.

### SUMMARY

In order to solve the technical problems existing in the related art, embodiments of the disclosure provide a method and apparatus for processing a SRv6 packet, a communication device, and a storage medium.

In order to achieve the above objectives, technical solutions of the embodiments of the disclosure are implemented as follows.

According to a first aspect, an embodiment of the disclosure provides a method for processing a segment routing over Internet protocol version 6 (SRv6) packet, including the following operations.

A user side device replaces a source address in an outer header of a first SRv6 packet with a first segment identifier (SID) among the multiple SIDs, based on pre-obtained multiple segment identifiers (SIDs) for representing addresses, and generates a second SRv6 packet. Herein the multiple SIDs are pre-formulated by a network service provider.

The second SRv6 packet is sent to a network device.

In the above solution, the method further includes the following operations.

The user side device receives the multiple SIDs sent by a first control device; or
the user side device pre-configures the multiple SIDs.

According to a second aspect, an embodiment of the disclosure further provides a method for processing a segment routing over Internet protocol version 6 (SRv6) packet, including the following operations.

A network device receives the SRv6 packet sent by a user side device, and extracts a source address from an outer header of the SRv6 packet.

Whether routing information corresponding to the source address is included in a forwarding table is checked. Herein the forwarding table includes routing information corresponding to multiple segment identifiers (SIDs) for representing addresses, and the multiple SIDs are pre-formulated by a network service provider.

The SRv6 packet is forwarded in response to determining that the routing information corresponding to the source address is included in the forwarding table.

In the above solution, the method further includes the following operation. The SRv6 packet is discarded in response to the network device determining that the routing information corresponding to the source address is not included in the forwarding table.

In the above solution, the method further includes the following operations. The network device checks whether the source address is one of the multiple SIDs.

The SRv6 packet is discarded in response to determining the source address is not one of the multiple SIDs.

In the above solution, the operation that the SRv6 packet is forwarded in response to determining that the routing information corresponding to the source address is included in the forwarding table includes the following operation.

The SRv6 packet is forwarded to the network device determining that the source address is one of the multiple SIDs and the routing information corresponding to the source address is included in the forwarding table.

In the above solution, the method further includes the following operation.

The network device receives the forwarding table sent by a second control device; or
the network device pre-configures the forwarding table.

In the above solution, the method further includes the following operation.

The network device receives the multiple SIDs sent by a second control device; or
the network device pre-configures the multiple SIDs; or
the network device obtains the multiple SIDs from the forwarding table.

In the above solution, before the source address is extracted from the outer header of the SRv6 packet, the method further includes the following operations.

The network device extracts a destination address from the outer header of the SRv6 packet, and checks whether the destination address is an address of the network device.

The operation that whether the routing information corresponding to the source address is included in the forwarding table is checked includes the following operation.

Whether the routing information corresponding to the source address is included in the forwarding table is checked in response to determining that the destination address is the address of the network device.

According to a third aspect, an embodiment of the disclosure further provides an apparatus for processing a segment routing over Internet protocol version 6 (SRv6) packet, including a first processing unit and a first communication unit.

The first processing unit is configured to replace, based on pre-obtained multiple segment identifiers (SIDs) for representing addresses, a source address in an outer header of a first SRv6 packet with a first segment identifier (SID) among the multiple SIDs, and generate a second SRv6 packet. Herein the multiple SIDs are pre-formulated by a network service provider.

The first communication unit is configured to send the second SRv6 packet to a network device.

According to a fourth aspect, an embodiment of the disclosure further provides an apparatus for processing a segment routing over Internet protocol version 6 (SRv6) packet, including a second communication unit and a second processing unit.

The second communication unit is configured to receive the SRv6 packet sent by a user side device.

The second processing unit is configured to extract a source address from an outer header of the SRv6 packet, and check whether routing information corresponding to the source address is included in a forwarding table. Herein the forwarding table includes routing information corresponding to multiple segment identifiers (SIDs) for representing addresses, and the multiple SIDs are pre-formulated by a network service provider.

The second communication unit is further configured to forward the SRv6 packet in response to the second processing unit determining that the routing information corresponding to the source address is included in the forwarding table.

According to a fifth aspect, an embodiment of the disclosure further provides a computer-readable storage medium, having stored thereon a computer program, and the computer program, when executed by a processor, implements the operations of the method in the first aspect or the second aspect of the embodiment of the disclosure.

According to a sixth aspect, an embodiment of the disclosure further provides a communication device, including a memory, a processor, and a computer program stored in the memory and executable by the processor, and the processor, when executing the computer program, implements the operations of the method in the first aspect or the second aspect of the embodiment of the disclosure.

The embodiments of the disclosure provide a method and apparatus for processing a SRv6 packet, a communication device, and a storage medium. A user side device replaces a source address in an outer header of a first SRv6 packet with a first SID among the multiple SIDs, based on pre-obtained multiple SIDs pre-formulated by a network service provider for representing addresses, and generates a second SRv6 packet, and sends the second SRv6 packet to a network device. The network device checks whether routing information corresponding to the source address is included in a forwarding table by checking the source address in the outer header of the SRv6 packet. Since the forwarding table includes routing information corresponding to multiple end-to-end pre-formulated SIDs, it is possible to determine whether the currently extracted source address is an SID and whether the current SID as the source address is routable, so that only SRv6 packets with authorized or legal SIDs as source addresses can be forwarded, avoiding source address spoofing. Furthermore, the embodiments use the pre-formulated SID as the source address in the forwarding path, and check the routability of the SID as the source address, there is no need to use hash information as used in the related art for checking whether the SRH is modified, thus avoiding the situation where the hash information is obtained through packet capture. The embodiments are simple to implement, have strong feasibility, and have no impact on forwarding performance.

### BRIEF DESCRIPTION OF THE DRAWINGS

FIG. 1 is a schematic diagram of a format of an SRv6 packet;
FIG. 2 is a first schematic flowchart of a method for processing an SRv6 packet according to an embodiment of the disclosure;
FIG. 3 is a schematic diagram of an application scenario of a method for processing an SRv6 packet according to an embodiment of the disclosure;
FIG. 4 is a second schematic flowchart of a method for processing an SRv6 packet according to an embodiment of the disclosure;
FIG. 5 is a third schematic flowchart of a method for processing an SRv6 packet according to an embodiment of the disclosure;
FIG. 6 is a first schematic diagram of a composition structure of an apparatus for processing an SRv6 packet according to an embodiment of the disclosure;
FIG. 7 is a second schematic diagram of a composition structure of an apparatus for processing an SRv6 packet according to an embodiment of the disclosure; and
FIG. 8 is a schematic diagram of a hardware composition structure of a communication device according to an embodiment of the disclosure.

### DETAILED DESCRIPTION

The disclosure is elaborated in detail below with reference to the drawings and specific embodiments.

The technical solutions of the embodiments of the disclosure may be applied to various communication systems, such as global system of mobile communication (GSM) systems, long term evolution (LTE) systems, or 5th-generation (5G) systems, etc. Optionally, a 5G system or 5G network may also be referred to as a new radio (NR) system or NR network.

Exemplarily, a communication system to which an embodiment of the disclosure is applied may include a network device and a terminal device (which may also be referred to as a terminal, a communication terminal, etc.); and the network device may be a device that communicates with the terminal device. Herein the network device may provide communication coverage within a certain area, and may communicate with a terminal located within the area. Optionally, the network device may be a base station in various communication systems, such as an evolutional node B (eNB) in an LTE system, or the next generation node B (gNB) in a 5G system or NR system. Optionally, the network device may also be an access network device in various communication systems.

It should be understood that a device with communication functions in the network/system in the embodiments of the disclosure may be referred to as a communication device. The communication device may include a network device and a terminal with communication functions, and the network device and the terminal device may be specific devices described above, and will not be repeated herein. The communication device may also include other devices in the communication systems, such as a network controller, a mobile management entity, and other network entities, which are not limited in the embodiments of the disclosure.

It should be understood that terms "system" and "network" are often used interchangeably in the disclosure. A term "and/or" in the disclosure is only an association relationship describing associated objects, and indicates that there may be three relationships. For example, A and/or B may indicate three cases: existence of A alone, existence of A and B simultaneously, and existence of B alone. Furthermore, a character "/" in the disclosure generally indicates that associated objects before and after are in an "or" relationship.

Terms "first", "second" and the like in the specification and claims of the disclosure are used to distinguish similar objects, and do not necessarily describe a particular order or sequence. It should be understood that the data used in this way may be interchangeable in appropriate circumstances, so that the embodiments of the disclosure described herein, for example, can be implemented in an order other than those illustrated or described herein. Furthermore, terms "include" and "have" and any variations thereof are intended to cover a non-exclusive inclusion, for example, processes, methods, systems, products, or devices including a series of operations or units are not necessarily limited to those operations or units that are clearly listed, but may include other operations or units that are not clearly listed or inherent to these processes, methods, products, or devices.

Before providing a detail explanation of the embodiments of the disclosure, an SRv6 packet will be briefly described first. The SRv6 is segment routing based on an IPv6 forwarding plane, which may be simply described as SR + IPv6. The SRv6 uses an IPv6 forwarding technology and realizes network programmability through a flexible IPv6 extension header.

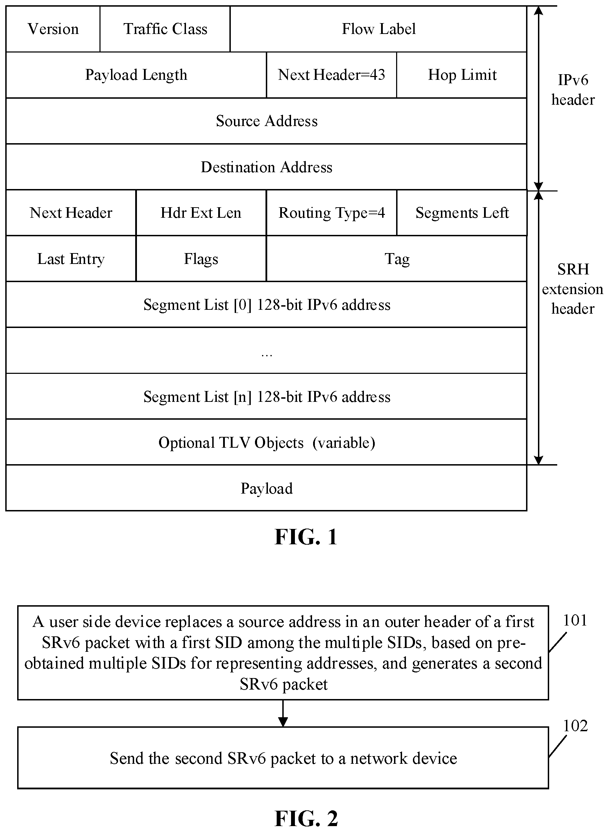

FIG. 1 is a schematic diagram of a format of an SRv6 packet. As shown in FIG. 1, a first part is an IPv6 header, and a second part is a segment routing header (SRH) extension header, where an optional type length value (TLV) object part is a flexible and variable part; and a last part is payload.

In the first part, "Next Header" identifies a type of a header immediately following the SRH. Next Header = 43, indicating that the SRH is followed by an IPv6 routing extension header. "Routing Type" identifies a type of a routing header. Routing Type = 4, indicating that the type of the routing header is an SRH routing extension header. Each "Segment List" represents an end-to-end path from a source to a destination.

An SRv6 Policy may be associated with multiple candidate paths, each with a preference. When there are multiple candidate paths, the SRv6 Policy selects a candidate path with a highest preference as a primary path. A candidate path is a basic unit of optional paths for sending the SRv6 Policy to a head end through protocols such as a border gateway protocol (BGP) SR policy/path computation element communication protocol (PCEP). Different protocols will issue different candidate paths.

A binding segment identifier (BSID) is also a fundamental instruction of segment routing. The BSID is configured to identify an entire candidate path and provide functions such as tunnel connections and traffic steering. If a packet carries a BSID corresponding to a candidate path, it will be directed to the corresponding candidate path.

If the SRv6 policy is considered as a network service, the BSID is an interface for accessing this service. Therefore, the design of the SRv6 policy is a subscribe-publish model, where a business subscribes to the network service according to its own need, and the network provides the interface for accessing the service to the business.

An embodiment of the disclosure provides a method for processing an SRv6 packet. FIG. 2 is a first schematic flowchart of the method for processing the SRv6 packet according to an embodiment of the disclosure. As shown in FIG. 2, the method includes operations 101 to 102.

At operation 101, a user side device replaces a source address in an outer header of a first SRv6 packet with a first segment identifier (SID) among the multiple SIDs, based on pre-obtained multiple segment identifiers (SIDs) for representing addresses, and generates a second SRv6 packet. Herein the multiple SIDs are pre-formulated by a network service provider.

At operation 102, the second SRv6 packet is sent to a network device.

It should be noted that the aforementioned "replace" may be understood as "set", the source address in the outer header of the first SRv6 packet is replaced with the first SID, that is, the source address in the outer header of the first SRv6 packet is set as the first SID. The first SID is one of the multiple SIDs, and the user side device may pre-obtain the multiple SIDs, that is, the user side device may pre-obtain the first SID.

In the embodiment, the user side device may be a customer premise equipment (CPE) or other user devices, and the type of the user side device is not limited in the embodiment.

In the embodiment, the user side device pre-obtains the multiple SIDs pre-formulated by the network service provider (or operator) for representing addresses, and uses one SID as the source address in the outer header of the SRv6 packet. Herein the multiple SIDs pre-obtained by the user side device may be addresses with special encoding rules pre-formulated by the network service provider (or operator), or may also be referred to as trusted addresses or trusted identifiers, which are generally difficult to obtain, that is, difficult to be used by illegal persons.

In some optional embodiments of the disclosure, the method further includes that: the user side device receives the multiple SIDs sent by a first control device; or the user side device pre-configures the multiple SIDs.

The multiple SIDs may be configured by the first control device, or may be pre-configured by the user side device. The first SID is one of the multiple SIDs, the first SID may be received by the user side device from the first control device, that is, the first SID may be configured by the first control device, or the first SID may be pre-configured by the user side device.

In the embodiment, as an implementation, before the user side device replaces the source address in the outer header of the first SRv6 packet with the first SID among the multiple SIDs, the user side device receives the multiple SIDs sent by the first control device, that is, the first control device may issue the multiple SIDs to the user side device. Herein the first control device is a trusted device, for example, a device belonging to the network service provider. Exemplarily, the first control device may be a software defined-wide area network (SD-WAN) device. As another implementation, the multiple SIDs may be configured at the user side device by manual configuration.

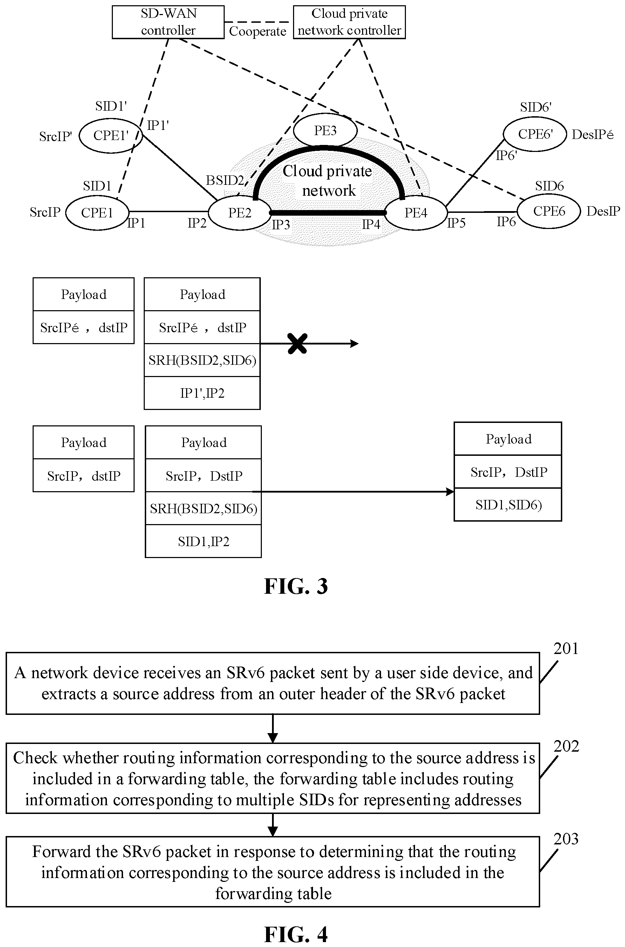

FIG. 3 is a schematic diagram of an application scenario of a method for processing an SRv6 packet according to an embodiment of the disclosure. As shown in FIG. 3, for example, two user side devices (CPE1 and CPE1') may be included, and CPE1' is an untrusted device. When the two devices send SRv6 packets, a source address in an outer header of an SRv6 packet sent by CPE1' is still an address IP1' of CPE1'; and the technical solution of the embodiment is applied to CPE1, CPE1 replaces a source address IP1 in an outer header of an SRv6 packet (referred to as the first SRv6 packet) with an SID1, generates a second SRv6 packet, and sends the second SRv6 packet to a network device.

According to the above embodiment, an embodiment of the disclosure further provides a method for processing an SRv6 packet. FIG. 4 is a first schematic flowchart of the method for processing the SRv6 packet according to an embodiment of the disclosure. As shown in FIG. 4, the method includes operations 201 to 203.

At operation 201, a network device receives the SRv6 packet sent by a user side device, and extracts a source address from an outer header of the SRv6 packet.

At operation 202, whether routing information corresponding to the source address is included in a forwarding table is checked. Herein the forwarding table includes routing information corresponding to multiple SIDs for representing addresses, and the multiple SIDs are pre-formulated by a network service provider.

At operation 203, the SRv6 packet is forwarded in response to determining that the routing information corresponding to the source address is included in the forwarding table.

In the embodiment, the network device is, for example, a provider edge (PE) device as an edge device of a cloud private network. Packets (or traffic) from the user side device enter the cloud private network through the network device (such as the PE device).

In some optional embodiments of the disclosure, the method further includes that: the SRv6 packet is discarded when the network device determines that the routing information corresponding to the source address is not included in the forwarding table.

In the embodiment, the network device may receive an SRv6 packet sent by each user side device, extract a source address from an outer header of the SRv6 packet, and determine whether routing information corresponding to the source address is included in a pre-obtained forwarding table. Since the forwarding table includes routing information corresponding to multiple SIDs for representing addresses, that is, the forwarding table includes routing information corresponding to multiple end-to-end pre-formulated SIDs, it is possible to determine whether the currently extracted source address is an SID and whether the current SID as the source address is routable, so that only SRv6 packets with authorized or legal SIDs as source addresses can be forwarded, while SRv6 packets with unauthorized or illegal source addresses are discarded, thus avoiding source address spoofing.

Furthermore, the embodiment uses the pre-formulated SID as the source address in the forwarding path, and checks the routability of the SID as the source address. Therefore, it no longer needs to use hash information as used in the related art for checking whether the SRH is modified, thus avoiding obtaining the hash information through packet capture. The embodiment is simple to implement, has strong feasibility, and has no impact on forwarding performance.

In some optional embodiments of the disclosure, the method further includes that: the network device receives the forwarding table sent by a second control device; or the network device pre-configures the forwarding table.

In the embodiment, as an implementation, the network device receives the forwarding table sent by the second control device before checking whether the routing information corresponding to the source address is included in the forwarding table, that is, the second control device may issue the forwarding table to the network device. Herein the second control device is a trusted device, and may be, for example, a cloud private network control device belonging to the network service provider. Exemplarily, the first control device in the above embodiment may negotiate with the second control device, and the second control device may obtain the forwarding table from the first control device. For example, the second control device may obtain an updated forwarding table from the first control device whenever routing information corresponding to a new SID is added to the forwarding table.

As another implementation, the forwarding table may be configured at the network device by manual configuration, for example, based on the pre-formulated SIDs, routing information corresponding to the related SIDs may be pre-configured at the network device.

In some optional embodiments of the disclosure, the method further includes that: the network device checks whether the source address is one of the multiple SIDs; and discards the SRv6 packet in response to determining that the source address is not one of the multiple SIDs.

In the embodiment, the network device may further check whether the extracted source address is one of the multiple pre-formulated SIDs, that is, check whether the extracted source address is a legal or authorized SID; and discard the SRv6 packet when the extracted source address is not a legal or authorized SID.

Optionally, an order of the legality check and the routability check for the source address is not limited. The legality check for the source address may be performed first, and then the routability check for the source address is performed, or the routability check for the source address may be performed first, and then the legality check for the source address is performed.

In some optional embodiments of the disclosure, the operation that the SRv6 packet is forwarded in response to determining that the routing information corresponding to the source address is included in the forwarding table includes that: the network device forwards the SRv6 packet when determining that the source address is one of the multiple SIDs and the routing information corresponding to the source address is included in the forwarding table.

In some optional embodiments of the disclosure, the method further includes that: the network device receives the multiple SIDs sent by a second control device; or the network device pre-configures the multiple SIDs; or the network device obtains the multiple SIDs from the forwarding table.

In the embodiment, as an implementation, the network device receives the multiple SIDs sent by the second control device before checking whether the source address is one of the multiple SIDs, that is, the second control device may issue the multiple SIDs to the network device. Herein the first control device in the above embodiment may negotiate with the second control device, and the second control device may obtain the multiple SIDs from the first control device. As another implementation, the multiple SIDs may be configured at the network device by manual configuration. As yet another implementation, since the forwarding table includes the routing information corresponding to the multiple SIDs, the network device may obtain the multiple SIDs from the obtained forwarding table.

In some optional embodiments of the disclosure, before the source address is extracted from the outer header of the SRv6 packet, the method further includes the following operations. The network device extracts a destination address from the outer header of the SRv6 packet, and checks whether the destination address is an address of the network device.

The operation that whether the routing information corresponding to the source address is included in the forwarding table is checked includes that: whether the routing information corresponding to the source address is included in the forwarding table is checked when determining that the destination address is the address of the network device.

In the embodiment, after receiving the SRv6 packet, the network device may first check whether the destination address in the outer header of the SRv6 packet is its own address, and the SID may be configured to represent the address, that is, the network device may first check whether the destination address in the outer header of the SRv6 packet is the SID of the network device. In an example shown in FIG. 3, whether a destination address in an outer header of an SRv6 packet is IP2 is checked. If the destination address is IP2, then subsequent extraction and check of the source address are performed. If the destination address is not IP2, it indicates that the network device may be an intermediate node device, and packet forwarding may be performed by following a conventional process, i.e., looking up a routing table.

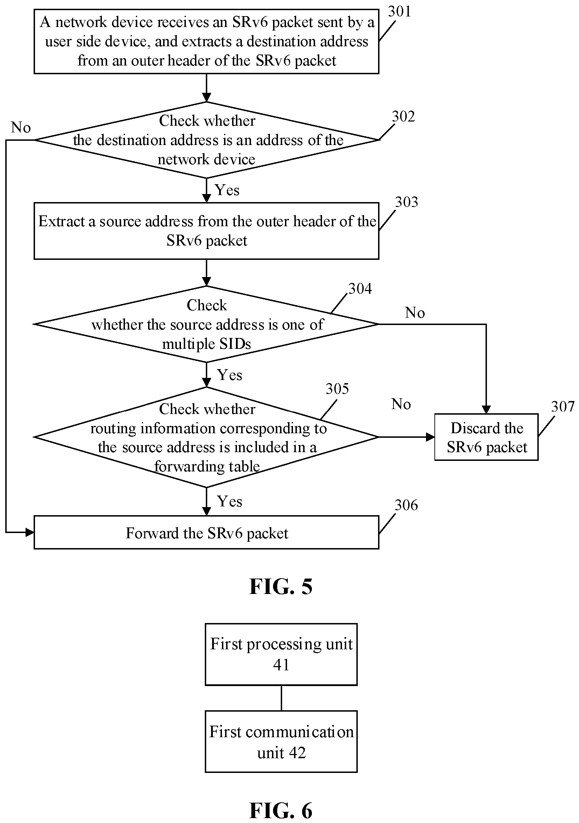

A method for processing an SRv6 packet according to an embodiment of the disclosure is described below with a specific embodiment. FIG. 5 is a third schematic flowchart of the method for processing the SRv6 packet according to an embodiment of the disclosure. As shown in FIG. 5, the method includes operations 301 to 307.

At operation 301, a network device receives the SRv6 packet sent by a user side device, and extracts a destination address from an outer header of the SRv6 packet.

At operation 302, whether the destination address is an address of the network device is checked. When determining that the destination address is the address of the network device, operation 303 is performed. When determining that the destination address is not the address of the network device, operation 306 is performed.

At operation 303, a source address is extracted from the outer header of the SRv6 packet.

At operation 304, whether the source address is one of multiple SIDs is checked. Herein the multiple SIDs are pre-formulated by a network service provider. When determining that the source address is one of the multiple SIDs, operation 305 is performed. When determining that the source address is not one of the multiple SIDs, operation 307 is performed.

This operation is to check whether the source address is a legal or authorized SID. If determining that the source address is not a legal or authorized SID, the SRv6 packet is discarded, which may prevent attacks due to source address spoofing to a certain extent.

At operation 305, whether routing information corresponding to the source address is included in a forwarding table is checked. The forwarding table includes routing information corresponding to multiple SIDs for representing addresses. When determining that the routing information corresponding to the source address is included in the forwarding table, operation 306 is performed. When determining that the routing information corresponding to the source address is not included in the forwarding table, operation 307 is performed.

This operation is to check whether the SID as the source address is routable. When determining that the SID is not routable, the SRv6 packet may be considered an illegal or unauthorized packet, indicating source address spoofing, in which case the packet is discarded.

At operation 306, the SRv6 packet is forwarded.

Here, the network device may perform packet forwarding according to a conventional process, for example, by looking up a virtual routing forwarding (VRF) table to perform the packet forwarding.

At operation 307, the SRv6 packet is discarded.

An embodiment of the disclosure further provides an apparatus for processing an SRv6 packet, which is applied to a user side device. FIG. 6 is a first schematic diagram of a composition structure of the apparatus for processing the SRv6 packet according to an embodiment of the disclosure. As shown in FIG. 6, the apparatus includes a first processing unit 41 and a first communication unit 42.

The first processing unit 41 is configured to replace, based on pre-obtained multiple SIDs for representing addresses, a source address in an outer header of a first SRv6 packet with a first SID among the multiple SIDs, and generate a second SRv6 packet. Herein the multiple SIDs are pre-formulated by a network service provider.

The first communication unit 42 is configured to send the second SRv6 packet to a network device.

In some optional embodiments of the disclosure, the first communication unit 42 is further configured to receive the multiple SIDs sent by a first control device; or
the first processing unit 41 is further configured to pre-configure the multiple SIDs.

In the embodiment of the disclosure, the first processing unit 41 in the apparatus may be implemented by a central processing unit (CPU), a digital signal processor (DSP), a microcontroller unit (MCU) or a field-programmable gate array (FPGA) in practical applications. The first communication unit 42 in the apparatus may be implemented by a communication module (including a basic communication suite, an operating system, a communication module, a standardized interface and protocol, etc.) and transceiver antenna(s) in practical applications.

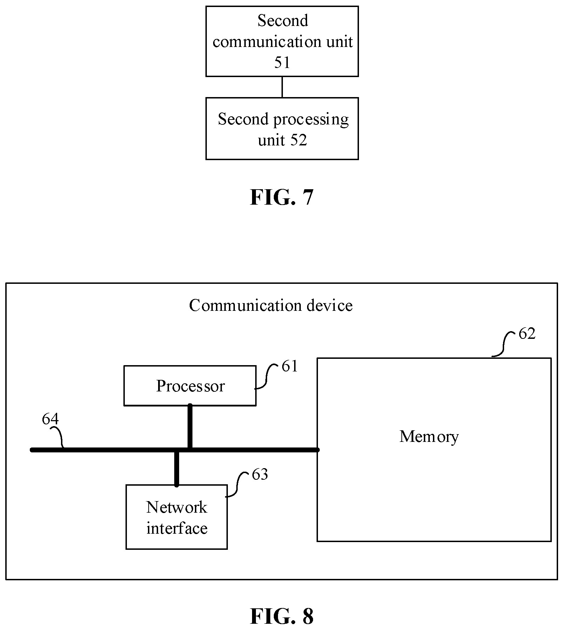

An embodiment of the disclosure further provides an apparatus for processing an SRv6 packet, which is applied to a network device. FIG. 7 is a second schematic diagram of a composition structure of the apparatus for processing the SRv6 packet according to an embodiment of the disclosure. As shown in FIG. 7, the apparatus includes a second communication unit 51 and a second processing unit 52.

The second communication unit 51 is configured to receive the SRv6 packet sent by a user side device.

The second processing unit 52 is configured to extract a source address from an outer header of the SRv6 packet, and check whether routing information corresponding to the source address is included in a forwarding table. Herein the forwarding table includes routing information corresponding to multiple SIDs for representing addresses, and the multiple SIDs are pre-formulated by a network service provider.

The second communication unit 51 is further configured to forward the SRv6 packet when the second processing unit 52 determines that the routing information corresponding to the source address is included in the forwarding table.

In some optional embodiments of the disclosure, the second processing unit 52 is further configured to discard the SRv6 packet when determining that the routing information corresponding to the source address is not included in the forwarding table.

In some optional embodiments of the disclosure, the second processing unit 52 is further configured to check whether the source address is one of the multiple SIDs; and
discard the SRv6 packet when determining that the source address is not one of the multiple SIDs.

In some optional embodiments of the disclosure, the second processing unit 52 is configured to forward the SRv6 packet when determining that the source address is one of the multiple SIDs and the routing information corresponding to the source address is included in the forwarding table.

In some optional embodiments of the disclosure, the second communication unit 51 is further configured to receive the forwarding table sent by a second control device; or
the second processing unit 52 is further configured to pre-configure the forwarding table.

In some optional embodiments of the disclosure, the second communication unit 51 is further configured to receive the multiple SIDs sent by a second control device; or
the second processing unit 52 is further configured to pre-configure the multiple SIDs or obtain the multiple SIDs from the forwarding table.

In some optional embodiments of the disclosure, the second processing unit 52 is further configured to extract a destination address from the outer header of the SRv6 packet, and check whether the destination address is an address of the network device. and check whether the routing information corresponding to the source address is included in the forwarding table when determining that the destination address is the address of the network device.

In the embodiment of the disclosure, the second processing unit 52 in the apparatus may be implemented by a CPU, a DSP, an MCU, or an FPGA in practical applications. The second communication unit 51 in the apparatus may be implemented by a communication module (including a basic communication suite, an operating system, a communication module, a standardized interface and protocol, etc.) and transceiver antenna(s) in practical applications.

It should be noted that, when the apparatus for processing the SRv6 packet according to the above embodiment processes the SRv6 packet, the division into program modules is illustrated only as an example. In practical applications, the processing may be assigned to different program modules as needed, that is, an internal structure of the apparatus may be divided into different program modules to complete all or part of the processing described above. Furthermore, the apparatus for processing the SRv6 packet according to the above embodiment belongs to a same concept as the method embodiment for processing the SRv6 packet. The specific implementation process of the apparatus for processing the SRv6 packet is detailed in the method embodiment, and will not be repeated herein.

An embodiment of the disclosure further provides a communication device, which is a user side device or a network device. FIG. 8 is a schematic diagram of a hardware composition structure of the communication device according to an embodiment of the disclosure. As shown in FIG. 8, the communication device includes a memory 62, a processor 61, and a computer program stored in the memory 62 and executable by the processor 61, and the processor 61, when executing the program, implements the operations of the method for processing the SRv6 packet applied to the user side device; or the processor 61, when executing the program, implements the operations of the method for processing the SRv6 packet applied to the network device.

Optionally, the communication device further includes at least one network interface 63. Herein the various components in the communication device are coupled together by a bus system 64. It may be understood that the bus system 64 is configured to implement connection communication between these components. The bus system 64 includes not only a data bus, but also a power bus, a control bus and a status signal bus. However, for the sake of clarity, the various buses are labeled as bus system 64 in FIG. 8.

It should be understood that the memory 62 may be a transitory memory or a non-transitory memory, and may include both the transitory memory and the non-transitory memory. Herein the non-transitory memory may be a read only memory (ROM), a programmable read-only memory (PROM), an erasable PROM (EPROM), an electrically EPROM (EEPROM), a ferromagnetic random access memory (FRAM), a flash memory, a magnetic surface memory, an optical disc, or a compact disc read-only memory (CD-ROM). The magnetic surface memory may be a magnetic disk memory or a magnetic tape memory. The transitory memory may be a random access memory (RAM), which serves as an external cache. By way of example but not limitation, many forms of RAM are available, such as static RAM (SRAM), synchronous SRAM (SSRAM), dynamic RAM (DRAM), synchronous DRAM (SDRAM), double data rate SDRAM (DDRSDRAM), enhanced SDRAM (ESDRAM), synclink DRAM (SLDRAM), and direct rambus RAM (DRRAM). The memory 62 described in the embodiment of the disclosure is intended to include, but is not limited to, these and any other suitable types of memory.

The methods disclosed in the above embodiments of the disclosure may be applied to the processor 61 or implemented by the processor 61. The processor 61 may be an integrated circuit chip with signal processing capabilities. In the implementation process, the operations of the above methods may be completed by an integrated logic circuit of hardware in the processor 61 or instructions in the form of software. The processor 61 described above may be a general-purpose processor, a DSP, or other programmable logic device, a discrete gate or transistor logic device, a discrete hardware component, etc. The processor 61 may implement or execute the methods, operations, and logical block diagrams disclosed in the embodiments of the disclosure. The general-purpose processor may be a microprocessor or any conventional processor, etc. The operations of the methods disclosed in combination with the embodiments of the disclosure may be directly embodied as being executed by a hardware decoding processor, or as being executed by a combination of hardware and software modules in a decoding processor. The software module may be located in a storage medium, which is located in a memory 62, and the processor 61 reads information in the memory 62 and completes the operations of the aforementioned methods in combination with its hardware.

In an exemplary embodiment, the communication device may be implemented by one or more application specific integrated circuits (ASICs), DSPs, programmable logic devices (PLDs), complex programmable logic devices (CPLDs), FPGAs, general-purpose processors, controllers, MCUs, microprocessors, or other electronic components for performing the aforementioned methods.

In an exemplary embodiment, an embodiment of the disclosure further provides a computer-readable storage medium, such as the memory 62 including a computer program executable by the processor 61 of the communication device to complete the operations of the aforementioned methods. The computer-readable storage medium may be a memory such as a FRAM, a ROM, a PROM, an EPROM, an EEPROM, a flash memory, a magnetic surface memory, an optical disc, or a CD-ROM. The computer-readable storage medium may also be various devices including one or any combination of the above-mentioned memories.

The computer-readable storage medium according to the embodiment of the disclosure has stored thereon a computer program, and the computer program, when executed by a processor, implements the operations of the method for processing the SRv6 packet applied to the user side device; or the computer program, when executed by the processor, implements the operations of the method for processing the SRv6 packet applied to the network device.

The methods disclosed in the several method embodiments provided by the disclosure may be arbitrarily combined without conflict to obtain new method embodiments.

The features disclosed in the several product embodiments provided by the disclosure may be arbitrarily combined without conflict to obtain new product embodiments.

The features disclosed in the several method or device embodiments provided by the disclosure may be arbitrarily combined without conflict to obtain new method or device embodiments.

In the several embodiments provided by the disclosure, it should be understood that the disclosed devices and methods may be implemented in other ways. The device embodiments described above are only illustrative. For example, the division of the units is merely a logical function division. In practical implementation, there may be other division manners, such as multiple units or components may be combined or integrated into another system, or some features may be ignored or not executed. Furthermore, the coupling or direct coupling or communication connection between the shown or discussed components may be through some interfaces, indirect coupling or communication connection of devices or units, and may be electrical, mechanical, or of other forms.

The units described above as separate units may or may not be physically separated, and the components displayed as units may or may not be physical units, that is, they may be located in one place or may be distributed across multiple network units. Some or all of the units may be selected according to actual needs to implement the purposes of the solutions of the embodiments.

Furthermore, all functional units in the embodiments of the disclosure may be integrated into one processing unit, or each unit may be separately used as one unit, or two or more units may be integrated into one unit. The above integrated units may be implemented in a form of hardware or in a form of hardware and software functional units.

It may be understood by those ordinary skilled in the art that all or part of the operations of implementing the above method embodiments may be completed through hardware related to program instructions, the aforementioned program may be stored in a computer-readable storage medium, and the program, when executed, performs the operations of the above method embodiments; and the aforementioned storage medium includes various media capable of storing program codes, such as a portable storage device, a ROM, a RAM, a magnetic disk, or an optical disk.

Alternatively, if the above integrated units of the disclosure are implemented in a form of software function modules and sold or used as an independent product, they also may be stored in a computer-readable storage medium. Based on such an understanding, the technical solution in essence or a part contributing to the related art in the embodiments of the disclosure may be embodied in a form of a software product, which is stored in a storage medium and includes several instructions to cause a computer device (which may be a personal computer, a server, or a network device, etc.) to perform all or part of the methods in the embodiments of the disclosure. The aforementioned storage medium includes various media capable of storing program codes, such as a portable storage device, a ROM, a RAM, a magnetic disk, or an optical disk.

The above is merely specific implementations of the disclosure, but the scope of protection of the disclosure is not limited thereto. Any skilled in the art may easily conceive of changes or replacements within the technical scope of the disclosure, which should be included within the scope of protection of the disclosure. Therefore, the scope of protection of the disclosure should be based on the scope of protection of the claims.

## Claims

1. A method for processing a segment routing over Internet protocol version 6 (SRv6) packet, comprising:
setting , by a user side device based on a pre-obtained first segment identifier (SID) for representing an address, a source address in an outer header of a first SRv6 packet as the first SID, and generating a second SRv6 packet; wherein the first SID is pre-formulated by a network service provider; and
sending the second SRv6 packet to a network device.

2. The method of claim 1, wherein the first SID is received by the user side device from a first control device, and the first SID is configured by the first control device; or
the first SID is pre-configured by the user side device.

3. A method for processing a segment routing over Internet protocol version 6 (SRv6) packet, comprising:
receiving, by a network device, the SRv6 packet sent by a user side device, and extracting a source address from an outer header of the SRv6 packet;
checking whether routing information corresponding to the source address is comprised in a forwarding table; wherein the forwarding table comprises routing information corresponding to a plurality of segment identifiers (SIDs) for representing addresses, and the plurality of SIDs are pre-formulated by a network service provider; and
forwarding the SRv6 packet in response to determining that the routing information corresponding to the source address is comprised in the forwarding table.

4. The method of claim 3, further comprising:
discarding the SRv6 packet in response to the network device determining that the routing information corresponding to the source address is not comprised in the forwarding table.

5. The method of claim 3, further comprising:
checking, by the network device, whether the source address is one of the plurality of SIDs; and
discarding the SRv6 packet in response to the source address not being one of the plurality of SIDs.

6. The method of claim 5, wherein forwarding the SRv6 packet in response to determining that the routing information corresponding to the source address is comprised in the forwarding table comprises:
forwarding the SRv6 packet in response to the network device determining that the source address is one of the plurality of SIDs and the routing information corresponding to the source address is comprised in the forwarding table.

7. The method of claim 3, further comprising:
receiving, by the network device, the forwarding table sent by a second control device; or
pre-configuring, by the network device, the forwarding table.

8. The method of claim 5, further comprising:
receiving, by the network device, the plurality of SIDs sent by a second control device; or
pre-configuring, by the network device, the plurality of SIDs; or
obtaining, by the network device, the plurality of SIDs from the forwarding table.

9. The method of any one of claims 3 to 8, wherein before extracting the source address from the outer header of the SRv6 packet, the method further comprises:
extracting, by the network device, a destination address from the outer header of the SRv6 packet, and checking whether the destination address is an address of the network device;
wherein checking whether the routing information corresponding to the source address is comprised in the forwarding table comprises:
checking whether the routing information corresponding to the source address is comprised in the forwarding table in response to determining that the destination address is the address of the network device.

10. An apparatus for processing a segment routing over Internet protocol version 6 (SRv6) packet, comprising a first processing unit and a first communication unit;
the first processing unit, configured to set, through a user side device based on a pre-obtained first segment identifier (SID) for representing an address, a source address in an outer header of a first SRv6 packet as the first SID, and generate a second SRv6 packet; wherein the first SID is pre-formulated by a network service provider; and
the first communication unit, configured to send the second SRv6 packet to a network device.

11. An apparatus for processing a segment routing over Internet protocol version 6 (SRv6) packet, comprising a second communication unit and a second processing unit;
the second communication unit, configured to receive the SRv6 packet sent by a user side device;
the second processing unit, configured to extract a source address from an outer header of the SRv6 packet, and check whether routing information corresponding to the source address is comprised in a forwarding table; wherein the forwarding table comprises routing information corresponding to a plurality of segment identifiers (SIDs) for representing addresses, and the plurality of SIDs are pre-formulated by a network service provider; and
the second communication unit, further configured to forward the SRv6 packet in response to the second processing unit determining that the routing information corresponding to the source address is comprised in the forwarding table.

12. A computer-readable storage medium, having stored thereon a computer program, the computer program, when executed by a processor, implementing the operations of the method of claim 1 or 2; or
the computer program, when executed by the processor, implementing the operations of the method of any one of claims 3 to 9.

13. A communication device, comprising a memory, a processor, and a computer program stored in the memory and executable by the processor, the processor, when executing the computer program, implementing the operations of the method of claim 1 or 2; or
the processor, when executing the computer program, implementing the operations of the method of any one of claims 3 to 9.
